# EUROPÄISCHE PATENTSCHRIFT

(11) **EP 0 425 937 B1**
(45) Veröffentlichungstag und Bekanntmachung des Hinweises auf die Patenterteilung: **05.01.1994**
(21) Anmeldenummer: 90120085.7
(22) Anmeldetag: 19.10.1990
(51) Int. Cl.: G01D 5/26

(54) **Teilungsträger**
Support for a measuring scale
Support pour une échelle de mesure

(30) Priorität: 31.10.1989 DE 3936154
(43) Veröffentlichungstag der Anmeldung: 08.05.1991
(73) Patentinhaber: Dr. Johannes Heidenhain GmbH, D-83292 Traunreut (DE)
(72) Erfinder: Kraus, Heinz, W-8225 Traunreut (DE)

(56) Entgegenhaltungen:
- FR-A- 2 341 655
- LE VIDE, LES COUCHES MINCES, Nr. 243, August-Oktober 1988, Seiten 545-563; G. COQUERELLE: "Traitements de surface par laser"
- STAHL UND EISEN, Band 109, Nr. 21, 23. Oktober 1989, Seiten 76,995-997; W. KÖNIG et al.: "Laserstrahloberflächenbehandlung auf dem Weg zum Fertigungsverfahren"

## Beschreibung

Die Erfindung betrifft einen Teilungsträger aus Metall, für eine Längen- oder Winkelmeßeinrichtung.

Teilungsträger dieser Art werden vielfach in Längenmeßeinrichtungen bei Werkzeug- oder Meßmaschinen verwendet.

Bei Werkzeugmaschinen sind die Anbauflächen für den Teilungsträger, die Führungen und Antriebsspindeln etc. vorwiegend aus Stahl. Bei den heute verlangten Meßgenauigkeiten dürfen auch Temperaturveränderungen keine Meßfehler nach sich ziehen.

Es ist bekannt, als Material für den Teilungsträger Stahl zu verwenden, so daß bei Temperaturänderungen die Werkzeugmaschine, der Teilungsträger und ggf. das Werkstück faktisch die gleichen thermischen Längenänderungen erfahren.

Nachteilig bei Teilungsträgern aus Stahl ist, daß sich z.B. durch Schleifen und auch Polieren keine hochwertigen Oberflächen erzeugen lassen. Die Kristallstruktur des Metalls mit ihren Korngrenzen sowie den partiellen Anreicherungen von Kohlenstoff machen dies praktisch unmöglich.

Auch das Beschichten des metallischen Teilungsträgers hat nicht zum Ziel geführt. Die Oberflächengüte wird zwar verbessert, jedoch unter Inkaufnahme der Gefahr, daß sich infolge innerer Spannungen die am Träger aufgebrachte Schicht ablöst.

Weiterhin ist aus der FR-A-2341655 ein Metalloberflächenbehandlungsverfahren bekannt, bei dem mittels eines Lasers nichtkristalline, amorphe Metallzonen herstellbar sind.

Aufgabe der Erfindung ist es, einen stabilen widerstandsfähigen Teilungsträger aus Metall zu schaffen, dessen die Teilung tragender Bereich eine hohe Oberflächengüte aufweist.

Diese Aufgabe wird erfindungsgemäß durch die Merkmale im Kennzeichen des Anspruches 1 gelöst. Hergestellt wird ein derartiger Teilungsträger nach dem im Anspruch 3 angegebenen Verfahren.

Die Vorteile der Erfindung bestehen in erster Linie darin, daß als Teilungsträger ein Metall- vorzugsweise Stahl- verwendet werden kann und daß dabei zumindest der Bereich für die Teilung glasartige Eigenschaften aufweist. Dies ermöglicht die Anwendung bekannter Verfahren der Glasbearbeitung, wie Schleifen und Polieren etc.

Durch die Maßnahmen nach der Erfindung können also widerstandsfähige Oberflächen hoher Qualität erzielt werden, deren Vorzüge insbesondere bei Teilungsträgern lichtelektrischer Längen- oder Winkelmeßeinrichtungen zum Tragen kommen.

Zweckdienliche Ausbildungen und Verfahren zum Herstellen des Teilungsträgers sind Gegenstand der abhängigen Ansprüche.

Der Teilungsträger nach der Erfindung wird anhand der Zeichnung näher erläutert.
Es zeigen
- Figur 1: den Teilungsträger im Längsschnitt,
- Figur 2: den Teilungsträger im Querschnitt,
- Figur 3: den Teilungsträger als Bestandteil einer lichtelektrischen Längenmeßeinrichtung.

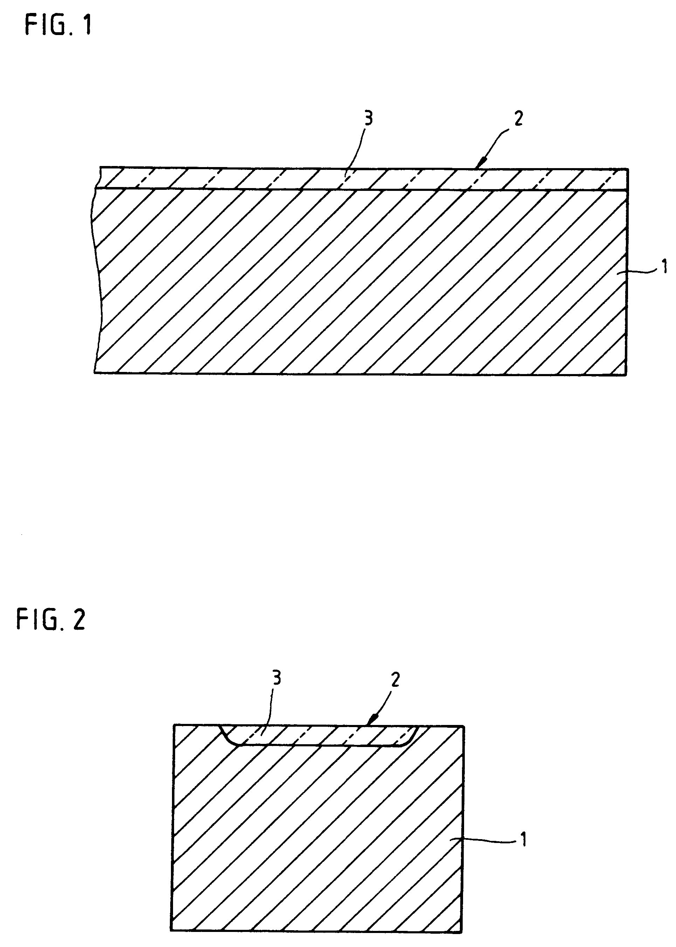

Der Teilungsträger 1 in den Figuren 1 bis 3 besteht aus Stahl. Dessen Flächenbereich 2 wurde mittels eines Umschmelzprozesses in einen amorphen Zustand umgewandelt. Das partielle Umschmelzen kann mit einem energiereichen Laserstrahl, der senkrecht auf den Flächenbereich 2 auftrifft und relativ zum Teilungsträger 1 bewegt wird erfolgen. Dabei wird der Teilungsträger 1 partiell auf sehr hohe Temperaturen erhitzt. Durch rasche Abkühlung infolge Selbstabschreckung wird die Bildung glasartig erstarrter Strukturen 3 bewirkt. Die lokal erzeugte Metallschmelze hat keine ausreichende Zeit, zu wohlgeordneten Kristallgefügen zu erstarren. Somit kann keine kristalline Struktur erzeugt werden, die Ordnung beschränkt sich auf sogenannte Clusters.

Die bei diesem Prozeß erforderliche schnelle Abkühlung ist bei einem Teilungsträger 1 aus Stahl gewährleistet, da er gegenüber dem Volumen der partiell erzeugten Schmelze eine große kalte Masse besitzt, die der Schmelze die Wärme genügend rasch entziehen kann.

Um den gesamten Flächenbereich 2 für die Teilung 4 behandeln zu können, muß der Laserstrahl relativ zum Teilungsträger 1 linienförmig hin und her bewegt werden, wobei sich die Spuren überlappen müssen. Liegt die erforderliche Breite des Bereichs 2 bei weniger als etwa 5 mm, so genügt die Umschmelzung entlang einer Spur.

Die erreichbare Einschmelztiefe liegt bei gleichzeitig geforderter guter Oberfläche bei etwa 0,5 mm. Durch das kontinuierliche partielle Umschmelzen werden bereits gute makrogeometrische Oberflächenqualitäten erzielt. Die gute mikrogeometrische Oberflächenqualität läßt sich durch Bearbeitungsverfahren, wie sie aus der Glasbearbeitung bekannt sind, vorteilhaft erreichen.

Der durch das Umschmelzen behandelte Flächenbereich 2 ist äußerst hart und besonders widerstandsfähig gegen aggressive Stoffe. Als weiterer Vorteil ist die geringe thermische Belastung des gesamten Teilungsträgers 1 durch die enge Begrenzung der erzeugten amorphen Struktur 3 zu nennen. Vor dem Umschmelzen an dem Teilungsträger 1 durch metallurgische Maßnahmen herbeigeführte Zustände, wie z.B. spannungsfrei glühen oder tempern, werden nicht beeinflußt.

Auf den optisch hochwertigen Oberflächenbereich 2 der amorphen Struktur 3 des Teilungsträgers 1 lassen sich in an sich bekannter Weise durch fotolithografische zeichenbildende Verfahren, durch Ätzen oder Ritzen sehr feine Teilungen erzeugen. Diese Verfahren sind aus der Herstellung von Glasmaßstäben bekannt und werden hier nicht weiter erläutert.

Bei dem beschriebenen Verfahren wird direkt in der Oberfläche des Teilungsträgers 1 die amorphe Struktur 3 des Stahls erzeugt. Wird in nicht gezeigter Weise auf einen Teilungsträger vor dem Umschmelzen eine sehr dünne Schicht galvanisch abgeschieden oder aufgedampft, dann lassen sich ebenfalls durch die Oberflächenbehandlung mit einem Laserstrahl glasartige amorphe Zonen schaffen, die sich aber in der Stoffzusammensetzung vom übrigen Teilungsträger unterscheiden. Eine weitere Möglichkeit zur Erzeugung einer Legierung ist das Zuführen eines Pulvers - zweckmäßig eines Metallpulvers - während der Umschmelzung. In allen Fällen wird eine amorphe Struktur erzeugt, die mit dem übrigen Teilungsträger 1 eine Einheit bildet.

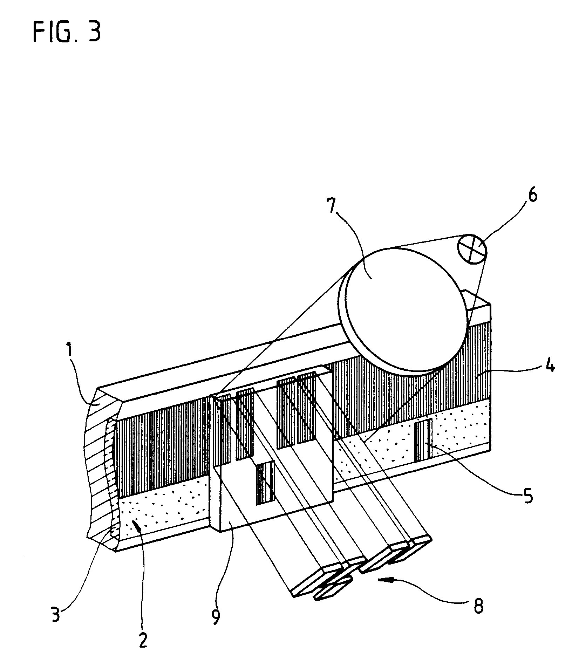

Der Vorteil des Teilungsträgers 1 mit Bereichen amorpher Struktur 3 kommt besonders bei lichtelektrischen Positionsmeßeinrichtungen zum Tragen. In der Figur 3 ist eine Längenmeßeinrichtung mit einem erfindungsgemäß gestalteten Teilungsträger 1 gezeigt. Der Teilungsträger 1 weist einen polierten Oberflächenbereich 2 auf, auf dem eine Teilung 4 und eine Referenzmarke 5 ausgebildet sind. Die Teilung 4 besteht aus abwechselnd reflektierenden und nichtreflektierenden Bereichen. Sie wird von einer Lichtquelle 6 über einen Kollimator 7 beleuchtet und eine Empfängeranordnung 8 erfaßt das von den reflektierenden Bereichen reflektierte und von einer Abtastplatte 9 durchgelassene Licht. Das so durch Relativbewegung zwischen dem Teilungsträger 1 und der Abtasteinheit, bestehend aus Abtastplatte 9, Lichtquelle 6 und Empfängeranordnung 8, modulierte und von der Empfängeranordnung 8 erfaßte Licht wird in positionsabhängige elektrische Signale umgewandelt und ausgewertet.

Der Teilungsträger 1 ist an einem nicht gezeigten Maschinenschlitten aus Stahl und die Abtasteinheit an einem Maschinenbett befestigt. Er kann ungeschützt, aber auch gekapselt verwendet werden.

Als Teilungsträger kann auch direkt ein Bestandteil einer Werkzeug - oder Meßmaschine dienen, beispielsweise deren Führungsflächen.

Die Teilung 4 auf dem Teilungsträger 1 ist im gezeigten Beispiel ein Amplitudengitter. Der erfindungsgemäß ausgestaltete Teilungsträger 1 eignet sich aber auch als Träger eines Phasengitters, insbesondere eines Stufengitters. Dieses Stufengitter kann durch bekannte Verfahren, wie Ätzen oder partielle Materialablagerungen, erzeugt werden.

Die Referenzmarke 5 ist ebenfalls auf dem Bereich 2 der amorphen Struktur 3 aufgebracht. Es ist ersichtlich, daß anstelle der inkrementalen Teilung 4 auch unregelmäßige Strukturen in Form einer Codierung auf den Oberflächenbereich 2 aufgebracht werden können. Die Erfindung ist damit nicht auf inkrementale Positionsmeßeinrichtungen beschränkt, sondern ist auch bei absoluten Meßeinrichtungen einsetzbar.

Seitlich der Teilung 4 können Führungsflächen für die gesamte Abtasteinheit oder nur für die Abtastplatte 9 vorgesehen sein. Diese Führungsflächen können ebenfalls durch Umschmelzen behandelt sein.

Der Teilungsträger nach der Erfindung kann auch Bestandteil einer kapazitiven, magnetischen oder induktiven Positionsmeßeinrichtung sein.

## Patentansprüche

1. Teilungsträger (1) aus Metall für eine Längen- oder Winkelmeßeinrichtung, dadurch gekennzeichnet, daß zumindest der die Teilung (4) aufweisende Bereich (2) des Teilungsträgers (1) eine amorphe Struktur (3) geringer Tiefe aufweist.

2. Teilungsträger nach Anspruch 1, dadurch gekennzeichnet, daß ein Stahlkörper (1) Träger der Teilung (4) ist.

3. Verfahren zur Herstellung eines Teilungsträgers (1) aus Metall für eine Längen- oder Winkelmeßeinrichtung, gekennzeichnet durch folgende Verfahrensschritte:
a) Erzeugen einer amorphen Struktur (3) geringer Tiefe auf zumindest dem für die Teilung (4) vorgesehenen Bereich (2) durch lokales Schmelzen dieses Bereiches (2) und rasches Abkühlen der Metallschmelze des Teilungsträgers (1);
b) Ausbilden der Teilung (4) auf der amorphen Struktur (3) des Teilungsträgers (1).

4. Verfahren nach Anspruch 3, dadurch gekennzeichnet, daß vor Durchführung der Verfahrensschritte a) und b) zumindest der für die Teilung vorgesehene Bereich des Teilungsträgers mit einer dünnen Materialschicht versehen wird.

5. Verfahren nach Anspruch 3, dadurch gekennzeichnet, daß vor Durchführung des Verfahrensschrittes b) der Oberflächenbereich (2) feinbearbeitet wird.

6. Verfahren nach einem der Ansprüche 3 bis 5, dadurch gekennzeichnet, daß das lokale Schmelzen des Teilungsträgers (1) mit einem Laser erfolgt.

7. Verfahren nach Anspruch 6, dadurch gekennzeichnet, daß während des lokalen Schmelzens ein Pulver in den Laserstrahl eingebracht wird.

## Claims

1. Graduation carrier (1) of metal for a length or angle measuring arrangement, characterised in that at least that zone (2) of the graduation carrier (1) which has the graduation (4) exhibits an amorphous structure (3) of small depth.

2. Graduation carrier according to claim 1, characterised in that a steel body (1) is the carrier for the graduation (4).

3. Process for manufacturing a graduation carrier (1) of metal for a length or angle measuring arrangement, characterised by the following steps:
a) production of an amorphous structure (3) of small depth on at least the zone (2) intended for the graduation (4) by local melting of this zone (2) and rapid cooling down of the molten metal of the graduation carrier (1);
b) formation of the graduation (4) on the amorphous structure (3) of the graduation carrier (1).

4. Process according to claim 3, characterised in that before carrying out the steps a) and b) of the process, at least that zone of the graduation carrier which is intended for the graduation is provided with a thin coating of material.

5. Process according to claim 3, characterised in that before carrying out the step b) of the process, the surface zone (2) is precision worked.

6. Process according to any one of claims 3 to 5, characterised in that the local melting of the graduation carrier (1) is effected with a laser.

7. Process according to claim 6, characterised in that a powder is introduced into the laser beam during the local melting.

## Revendications

1. Support de graduation (1) en métal destiné à un dispositif de mesure de longueurs ou d'angles, caractérisé par le fait qu'au moins la zone (2) du support (1) qui comporte la graduation (4) présente une structure (3) amorphe de faible profondeur.

2. Support de graduation selon la revendication 1, caractérisé par le fait que le support de la graduation (4) est constitué par un élément en acier (1).

3. Procédé de fabrication d'un support de graduation (1) en métal destiné à un dispositif de mesure de longueurs ou d'angles, caractérisé par les étapes suivantes:
a) production d'une structure (3) amorphe de faible profondeur sur au moins la zone (2) prévue pour la graduation (4) par fusion localisée de ladite zone (2) et refroidissement rapide du métal fondu du support de graduation (1);
b) formation de la graduation (4) sur la structure (3) amorphe du support de graduation (1).

4. Procédé selon la revendication 3, caractérisé par le fait que, avant de réaliser les étapes de procédé a) et b), on munit au moins la zone du support destinée à la graduation d'une fine couche de matériau.

5. Procédé selon la revendication 3, caractérisé par le fait que, avant d'exécuter l'étape de procédé b), on effectue un usinage fin de la zone (2) de la surface.

6. Procédé selon l'une des revendications 3 à 5, caractérisé par le fait que la fusion locale du support de graduation (1) est réalisée au moyen d'un laser.

7. Procédé selon la revendication 6, caractérisé par le fait qu'au cours de la fusion locale on introduit une poudre dans le rayon laser.
